# EUROPÄISCHE PATENTSCHRIFT

(11) **EP 2 225 134 B1**
(45) Veröffentlichungstag und Bekanntmachung des Hinweises auf die Patenterteilung: **20.06.2012**
(21) Anmeldenummer: 08854897.9
(22) Anmeldetag: 27.11.2008
(51) Int. Cl.: F15B 13/08, B60T 8/36, B60T 8/34, F16F 15/08, F16F 15/02

(54) **VORRICHTUNG ZUR FAHRDYNAMIKREGELUNG**
DEVICE FOR THE REGULATION OF DRIVING DYNAMICS
DISPOSITIF DE REGULATION DU COMPORTEMENT DYNAMIQUE

(30) Priorität: 27.11.2007 DE 102007057043
(43) Veröffentlichungstag der Anmeldung: 08.09.2010
(73) Patentinhaber: Continental Teves AG & Co. OHG, 60488 Frankfurt (DE)
(72) Erfinder: GIERS, Bernhard, 65812 Bad Soden (DE)
(86) Internationale Anmeldenummer: PCT/EP2008/066343
(87) Internationale Veröffentlichungsnummer: WO 2009/068612

(56) Entgegenhaltungen:
- WO-A-01/42691
- DE-A1- 10 036 086
- DE-A1- 10 347 189
- DE-A1- 19 529 314
- US-A1- 2003 136 891
- US-A1- 2004 163 470

## Beschreibung

Die Erfindung betrifft eine Vorrichtung zur Fahrdynamikregelung eines Fahrzeugs gemäß Oberbegriff von Anspruch 1 sowie deren Verwendung in Kraftfahrzeugen.

Die DE 197 55 431 beschreibt ein Fahrdynamikregelungssystem, bei dem ein Sensormodul für Fahrdynamiksensoren, umfassend Gierratensensoren und Beschleunigungssensoren, in einem getrennt von der hydraulischen Steuerung angeordneten elektronischen Gehäuse angeordnet sind, wobei in diesem Gehäuse die in die Bremselektronik integrierte Fahrdynamikelektronik angeordnet ist. Die hydraulische Steuerung ist dabei über einen Systembus mit der Bremselektronik verbunden.

Eine weitere Vorrichtung zur Fahrdynamikregelung mit einer Anordnung der Fahrdynamiksensoren in einem getrennten Gehäuse beschreibt die DE 198 47 667 A1. Nach der Schrift befinden sich die Fahrdynamiksensoren gemeinsam mit einer CPU für die Bremsenregelung in einem Gehäuse im Bereich der Fahrzeugmitte. Die Leistungselektronik mit den Ventiltreibern ist dagegen in den Bremsregler integriert, welcher mit der CPU über eine Schnittstelle verbunden ist.

Neben den vorstehend beschriebenen Vorrichtungen mit "verteilter Intelligenz" werden vielfach zur Fahrdynamikregelung (ESP), aber auch für ABS, ASR etc., integrierte Steuergeräte eingesetzt, die raumsparend sind und sich besonders kostengünstig fertigen lassen. Kennzeichnend für diese Art von Steuergeräten ist eine kompakte Bauweise mit einer monolithischen Einheit aus elektronischer Reglereinheit und einem Ventilblock, welche im Motorraum eines Kraftfahrzeugs angeordnet ist. Die Reglereinheit, welche mit Sensoren und Aktuatoren verschiedener Art, wie Raddrehzahlsensoren, Füllstandssensoren, elektromagnetische Hydraulikventile, Relais und dergleichen, verbunden ist, dient im Wesentlichen zur Steuerung/Regelung der Bremsen und zum Eingriff in das Motormanagement. Der Ventilblock, welcher mit der Reglereinheit über ein Stecksystem verbunden ist, umfasst magnetisch zu betätigende hydraulische Ventile zur Ansteuerung der Bremszylinder und einen angeflanschten Pumpenmotor.

Die Fahrdynamiksensorik umfassend Beschleunigungssensoren und mindestens einen Gierratensensor sind heute entweder in Form einzelner Bauelemente oder zusammengefasst und gehäust in einem getrennt vom integrierten Steuergerät angeordneten Modul mit eigener Prozessorintelligenz (Sensorcluster) im Bereich des Schwerpunktes des Fahrzeugs untergebracht.

Aus der EP 1 313 635 B1 sind eine Vorrichtung zur Fahrdynamikregelung und ein Verfahren zur Orientierung von Fahrdynamiksensoren bekannt, in dem die Fahrdynamiksensoren in der elektronischen Reglereinheit integriert sind und diese im oder direkt am Ventilblock positioniert ist. Hierdurch wird eine kostengünstige und kompakte Produktion einer Fahrdynamikreglungsvorrichtung erzielt.

Durch diese kompakte Bauweise entstehen allerdings widersprüchliche Anforderungen an das Konstruktionsprinzip hinsichtlich möglichst guter akustischer Entkopplung des Ventilblocks einerseits und andererseits einer möglichst starren Ankopplung an das Fahrzeugchassis der elektronischen Reglereinheit, um die Fahrdynamik des Fahrzeuges gut durch Sensoren erfassen zu können.

Das Dokument DE 100 36 086 A1 ist als nächstliegenden Stand der Technik nach der Oberbegriff des Anspruchs 1 zu sehen.

Der Erfindung liegt daher die Aufgabe zugrunde, eine Vorrichtung zur Fahrdynamikregelung vorzuschlagen, welche eine zumindest teilweise Schwingungs- bzw. Schallentkopplung des Ventilblocks vom Fahrzeugchassis ermöglicht.

Die Aufgabe wird erfindungsgemäß gelöst durch die Vorrichtung zur Fahrdynamikregelung gemäß Anspruch 1.

Der Erfindung liegt also insbesondere der Gedanke zu Grunde, den Ventilblock mittels der Reglereinheit direkt oder indirekt am Fahrzeugchassis zu befestigen.

Eine erfindungsgemäße Vorrichtung zur Fahrdynamikregelung hat den Vorteil, dass eine zumindest teilweise Schwingungs-Entkopplung des Ventilblocks vom Fahrzeugchassis erreicht wird. Dies betrifft insbesondere eine Verringerung des dabei auftretenden Schalls, was einer Erhöhung des Komforts für die Passagiere eines Fahrzeugs entspricht. Außerdem wird das Kraftfahrzeugchassis auch von akustisch nicht wahrnehmbarem, störendem Körperschall zumindest teilweise entkoppelt.

Die Erfindung geht vorzugsweise von der Überlegung aus, dass der Ventilblock nicht direkt am Fahrzeugchassis montiert wird, sondern nur indirekt über einen Trägersockel mit diesem verbunden wird, wobei die elektronische Reglereinheit Teil dieses Trägersockels ist und/oder als Trägersockel dient.

Die Befestigung des gesamten Reglersystems umfassend den elektronischen Regler und den Ventilblock, erfolgt vorzugsweise mittels eines Trägers am Fahrzeugchassis.

Zwischen der elektronischen Reglereinheit und dem Ventilblock sind bevorzugt ein oder mehrere Dämpfungselemente angeordnet. Insbesondere ist zumindest eines dieser Dämpfungselemente als elastischer Körper mit jeweils beidseitig zumindest einem in diesem verankerten Befestigungsmittel ausgebildet, wobei wenigstens eines der Befestigungsmittel mit der elektronischen Reglereinheit und ein mindestens ein anderes Befestigungsmittel mit dem Ventilblock verbunden ist.

Die elektronische Reglereinheit umfasst zweckmäßigerweise ein Gehäuse, welche wenigstens einen Gehäuse-Teilbereich aufweist, der elastisch ausgebildet ist oder elastische Eigenschaften aufweist. Der Ventilblock ist dabei besonders bevorzugt am Gehäuse der elektronischen Reglereinheit befestigt. Dieser Gehäuse-Teilbereich weist ganz besonders bevorzugt eine im Wesentlichen mäanderförmige Struktur auf. Diese Ausbildung ist relativ robust und kostengünstig und gewährleistet eine zumindest teilweise Entkopplung des Ventilblocks vom Fahrzeugchassis.

Der Ventilblock umfasst vorzugsweise zusätzlich den Pumpenmotor der Hydraulikpumpe bzw. die Hydraulikpumpe ist mit dem Ventilblock verbunden, wodurch diese ebenfalls vom Fahrzeugchassis zumindest teilweise schall- bzw. schwingungsentkoppelt ist, was unter anderem zu einem gesteigerten Komfort führt.

Es ist zweckmäßig, dass die elektronische Reglereinheit durch wenigstens ein Verbindungsmittel im Wesentlichen starr bzw. steif, direkt oder indirekt, mit dem Fahrzeugchassis verbunden ist. Hierdurch wird eine relativ gute sensorische Ankopplung mittels einer relativ guten Schwingungs- bzw. Schallankopplung der elektronischen Reglereinheit an das Fahrzeugchassis erreicht.

Vorzugsweise ist eine Anzahl von Fahrdynamiksensoren in der elektronischen Reglereinheit angeordnet, wodurch eine höhere Integration des gesamten Regelungssystems erreicht wird.

Es ist zweckmäßig, dass die Fahrdynamiksensoren steif bzw. starr direkt oder indirekt an das Fahrzeugchassis gekoppelt sind wobei zumindest Teile der elektronischen Reglereinheit vom Fahrzeugchassis schwingungs- bzw. schall-entkoppelt sind.

Es ist bevorzugt, dass die elektronische Reglereinheit einen Drehratensensor und/oder einen, insbesondere mehrachsigen bzw. zur Erfassung in unterschiedliche Raumrichtungen geeigneten, Beschleunigungssensor, umfasst. Dabei ist dieser zumindest eine Sensor direkt oder indirekt mit einem Gehäuseboden der Reglereinheit, welcher dem Fahrzeugchassis gegenüberliegend angeordnet ist, oder mindestens einem Verbindungsmittel, welches die Reglereinheit mit dem Fahrzeugchassis im Wesentlichen starr bzw. steif verbindet, im Wesentlichen starr bzw. steif verbunden. Hierdurch wird eine relativ gute Schwingungs- bzw. Schallankopplung des zumindest einen Sensors, beispielsweise zur Erfassung der Drehrate um die Hochachse des Fahrzeugs und/oder zur Erfassung von Körperschall zur Auslösung von Airbags, an das Fahrzeugchassis erreicht. Der eine oder die mehreren Sensoren sind dabei besonders bevorzugt auf einer Leiterplatte angeordnet, welche im Wesentlichen starr bzw. steif mit dem mindestens einen Verbindungsmittel zur Verbindung von elektronischem Regler und Chassis verbunden ist. Diese Leiterplatte ist insbesondere eine flexible Platine bzw. eine Flexfolien-Platine und beispielsweise am oder in der Nähe zumindest eines Verbindungsmittels eingeclipst. Die elektronische Reglereinheit umfasst dabei ganz besonders bevorzugt einen Gierratensensor und einen Längs- und Querbeschleunigungssensor.

Es ist zweckmäßig, dass die elektrischen Verbindungen, insbesondere Kabelverbindungen zwischen elektronischem Regler, insbesondere der Reglerplatine, und Ventilblock/Pumpenmotor elastisch und/oder flexibel ausgebildet sind. Alternativ oder ergänzend vorzugsweise sind die elektrischen Verbindungen, insbesondere Kabelverbindungen zwischen den Sensorelemente bzw. Sensoren, welche besonders bevorzugt starr mit dem Gehäuseboden des Reglergehäuse bzw. indirekt starr mit dem Fahrzeugchassis gekoppelt bzw. verbunden sind, und zumindest einer Reglerplatine bzw. Reglerelektronik elastisch und/oder flexibel ausgebildet.

Die in der elektronischen Reglereinheit integrierten Sensoren sind zur Ankopplung an das Fahrzeugchassis vorzugsweise möglichst nah an dem wenigstens einen Befestigungspunkt der elektronischen Reglereinheit mit dem Fahrzeugchassis angeordnet uns insbesondere mit diesem direkt oder indirekt verbunden. Diese Verbindung ist besonders bevorzugt möglichst starr.

Die Schwingungs- bzw. Schallkopplung bezieht sich bevorzugt auf einen Frequenzbereich zwischen 8 Hz und 20 kHz.

Das Gehäuse der Reglereinheit ist bevorzugt dafür ausgelegt, auch die Funktion eines Dämpfungselements zu übernehmen. Um die Schwingungs- bzw. Schall-Entkopplung des Ventilblocks vom Fahrzeugchassis weiter zu verbessern, ist in vorteilhafter Ausführung zwischen der elektronischen Reglereinheit und dem Ventilblock eine Anzahl von Dämpfungselementen angeordnet. Dadurch werden auftretende Schwingungen, die sich vom Ventilblock auf das Fahrzeugchassis übertragen, abgeschwächt. Somit wird der Komfort für die Fahrzeuginsassen im Betrieb der Vorrichtung zur Fahrdynamikregelung erhöht.

Um eine kompakte Bauweise der Vorrichtung zur Fahrdynamikregelung weiter zu fördern, ist in vorteilhafter Ausführung eine Anzahl von Fahrdynamiksensoren in der elektronischen Reglereinheit integriert. Der benötigte direkte Kontakt der Fahrdynamiksensoren ist durch die Zusatzfunktion der elektronischen Reglereinheit als Trägersockel am Fahrzeugchassis auf einfachste Weise gegeben.

Die mit der Erfindung erzielten Vorteile bestehen insbesondere darin, dass durch die Verwendung der elektronischen Reglereinheit als Trägersockel zur Befestigung des Ventilblocks am Fahrzeugchassis eine kompakte und kostengünstige Bauweise der Vorrichtung zur Fahrdynamikregelung ermöglicht wird. Weiterhin wird zum einen erreicht, dass die Fahrdynamiksensoren in der elektronischen Reglereinheit durch den direkten Kontakt mit dem Fahrzeugchassis besonders gut die Fahrdynamik des Fahrzeuges erfassen können und dass zum anderen gleichzeitig eine möglichst gute akustische Entkopplung des Ventilblocks vom Fahrzeugchassis erzielt wird.

Die Erfindung betrifft darüber hinaus die Verwendung der erfindungsgemäßen Vorrichtung zur Fahrdynamikregelung in Kraftfahrzeugen.

Weitere bevorzugte Ausführungsformen ergeben sich aus den Unteransprüchen und den nachfolgenden Beschreibungen von Ausführungsbeispielen an Hand von Figuren.

Es zeigen in schematischer Darstellung
- Fig. 1: ein erstes Ausführungsbeispiel einer Vorrichtung zur Fahrdynamikregelung sowie
- Fig. 2: eine zweite beispielhafte Vorrichtung zur Fahrdynamikregelung mit in der elektronischen Reglereinheit auf einer Leiterplatte integrierten Sensoren, wobei die Leiterplatte im Wesentlichen starr mit dem Chassis gekoppelt ist.

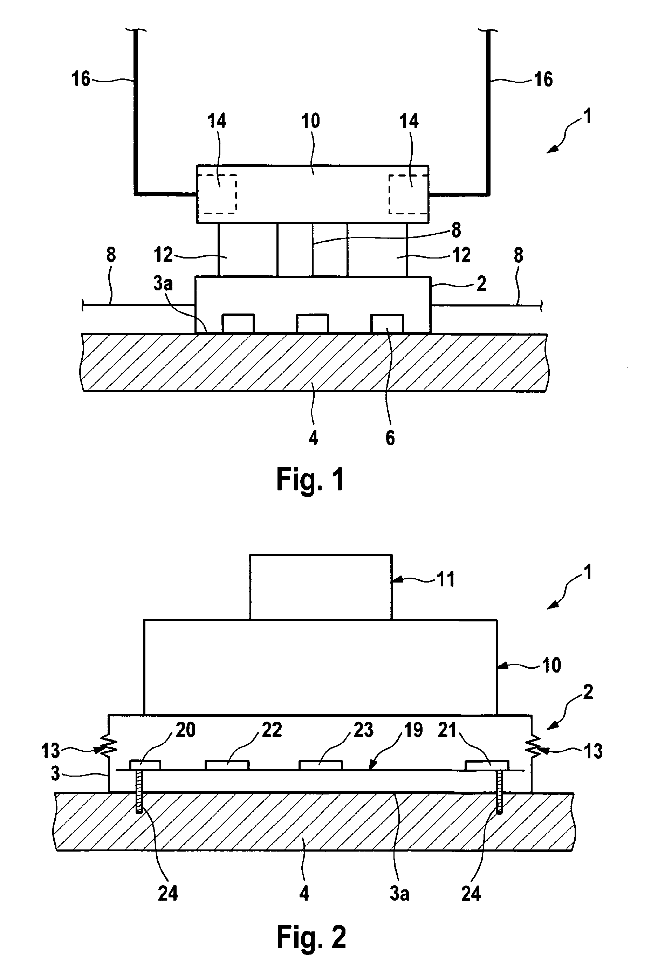

Der beispielgemäße Fahrdynamikregler 1 gemäß Fig. 1 umfasst eine elektronische Reglereinheit 2, die an dem Fahrzeugchassis 4 montiert ist. Diese elektronische Reglereinheit beinhaltet eine Anzahl von Fahrdynamiksensoren 6, welche am Reglergehäuseboden 3a befestigt sind, und somit relativ direkt an Fahrzeugchassis 4 hinsichtlich einer Schall- bzw. Schwingungsübertragung angekoppelt sind. Des Weiteren können an der elektronischen Reglereinheit 2 Signalleitungen 8 angeschlossen sein, welche Signale von weiteren Fahrdynamiksensoren, welche an anderen Orten des Fahrzeuges platziert sind, an die elektronische Reglereinheit 2 übertragen.

Ein Ventilblock 10 ist über Dämpfungselemente 12 auf der elektronischen Reglereinheit montiert. Der Ventilblock 10 verfügt dabei über eine Anzahl, im Ausführungsbeispiel zwei, Ventile 14, an denen Hydraulikleitungen 16 angeschlossen sind. Die durch die elektronische Reglereinheit 2 durch Auswertung der von den Fahrdynamiksensoren eintreffenden Signale ausgegebenen Befehle zur Steuerung der Ventile werden über eine Übertragungsleitung 18 von der elektronischen Reglereinheit 2 zum Ventilblock 10 übermittelt.

Durch die gezielte Konstruktion der elektronischen Reglereinheit 2 als Trägersockel des Ventilblocks 10 zur Montierung am Fahrzeugchassis 4 wird eine kompakte Bauweise des Fahrdynamikreglers 1 ermöglicht. Dabei wird durch den direkten Kontakt der Fahrdynamiksensoren 6 zum Fahrzeugchassis 4 sowohl eine gute Aufzeichnung der Fahrdynamikdaten ermöglicht als auch durch die Dämpfungselemente 12 zwischen der elektronischen Reglereinheit 2 und im Ventilblock 10 eine besonders gute akustische Entkopplung des Ventilblocks 10 vom Fahrzeugchassis 4 erreicht. Eine sichere und zuverlässige Funktionsweise des Ventilblocks 10 bzw. der Ventile 4 zur Steuerung von beispielsweise Airbag oder ABS-System wird damit sichergestellt.

Alternativ könnte auch das Gehäuse der Reglereinheit 2 dafür ausgelegt sein, dass es die Aufgabe der Dämpfungselemente 12 übernimmt.

Fig. 2 zeigt einen beispielgemäßen Fahrdynamikregler 1 eines Kraftfahrzeugregelungssystems, umfassend eine elektronische Reglereinheit 2, welche mittel Verbindungsmitteln 24, beispielgemäß Schrauben, mit Fahrzeugchassis 4 im Wesentlichen starr verbunden ist. Dabei sind diese Verbindungsmittel 24 seitens der Reglereinheit 2 mit deren Gehäuseboden 3a verbunden. Elektronische Reglereinheit 2 umfasst ein Reglergehäuse 3 mit welchem Ventilblock 10 verbunden ist. Dabei erfolgt diese Verbindung in einem alternativen, nicht dargestellten Ausführungsbeispiel, mittels mindestens eines zusätzlichen Dämpfungselements. Auf Ventilblock 10 ist Pumpenmotor 11 angeordnet. Reglergehäuse 3 weist einen Teilbereich der Gehäusewand 13 auf, welcher mittels einer mäanderförmigen Wandstruktur elastisch ausgebildet ist. In elektronischer Reglereinheit 2 ist Leiterplatte 19 angeordnet, welche mit Befestigungselementen 24 im Wesentlichen starr verbunden ist. Auf Leiterplatine 19 ist Gierratensensor 20 sowie ein Längs- und Querbeschleunigungssensor 21, der als zweiachsiger Beschleunigungssensor ausgebildet ist, jeweils im Bereich eines Verbindungsmittels 24 zur relativ direkten Ankopplung an Fahrzeugchassis 4, angeordnet. Darüber hinaus weist Leiterplatte 19 einen ASIC 23 zur Sensorsignalverarbeitung und als zentrale Rechnereinheit sowie eine Leistungselektronikschaltung 22 auf. Ventilblock 10 und Pumpenmotor 11 sind hierdurch von Fahrzeugchassis 4 zumindest teilweise schwingungs- bzw. schallentkoppelt, wodurch vornehmlich die Geräuschentwicklung bezüglich des Pumpen- und Ventilbetriebs im Fahrzeug vermindert wird. Die integrierten Sensoren 20, 21 sind hingegen relativ gut an das Fahrzeugchassis angekoppelt und können so Schwingungen bzw. Schall des Fahrzeugchassis sowie die Gierrate des Fahrzeugs relativ präzise und mit relativ hoher Empfindlichkeit erfassen.

### Bezugszeichenliste

- 1: Fahrdynamikregler
- 2: elektronische Reglereinheit
- 3: Reglergehäuse
- 3a: Reglergehäuseboden
- 4: Fahrzeugchassis
- 6: Fahrdynamiksensoren
- 8: Signalleitungen
- 10: Ventilblock
- 11: Pumpenmotor
- 12: Dämpfungselemente
- 13: Gehäuse-Teilbereich
- 14: Ventile
- 16: Hydraulikleitungen
- 18: Übertragungsleitung
- 19: Leiterplatte
- 20: Drehratensensor
- 21: Beschleunigungssensor
- 22: Leistungselektronik
- 23: ASIC
- 24: Verbindungsmittel

## Patentansprüche

1. Vorrichtung zur Fahrdynamikregelung (1) eines Fahrzeuges mit einer elektronischen Reglereinheit (2) und einem Ventilblock (10), **dadurch gekennzeichnet, dass** die elektronische Reglereinheit (2) als Trägersockel zur Befestigung des Ventilblocks (10) am Fahrzeugchassis (4) ausgelegt ist.

2. Vorrichtung zur Fahrdynamikregelung (1) nach Anspruch 1, **dadurch gekennzeichnet, dass** zwischen der elektronischen Reglereinheit (2) und dem Ventilblock (10) eine Anzahl von Dämpfungselementen (12) angeordnet sind.

3. Vorrichtung zur Fahrdynamikregelung (1) nach Anspruch 1 oder 2, **dadurch gekennzeichnet, dass** die elektronische Reglereinheit (2) ein Gehäuse (3) umfasst, welches wenigstens einen Gehäuse-Teilbereich (13) aufweist, der elastisch ausgebildet ist oder elastische Eigenschaften aufweist.

4. Vorrichtung zur Fahrdynamikregelung (1) nach Anspruch 3, **dadurch gekennzeichnet, dass** der Ventilblock (10) am Gehäuse der elektronischen Reglereinheit (2) befestigt ist.

5. Vorrichtung zur Fahrdynamikregelung (1) nach Anspruch 3 oder 4, **dadurch gekennzeichnet, dass** der Gehäuse-Teilbereich (13) eine im Wesentlichen mäanderförmige Struktur aufweist.

6. Vorrichtung zur Fahrdynamikregelung (1) nach mindestens einem der Ansprüche 1 bis 5, **dadurch gekennzeichnet, dass** die elektronische Reglereinheit (2) durch wenigstens ein Verbindungsmittel im Wesentlichen starr, direkt oder indirekt, mit dem Fahrzeugchassis (4) verbunden ist.

7. Vorrichtung zur Fahrdynamikregelung (1) nach mindestens einem der Ansprüche 1 bis 6, **dadurch gekennzeichnet, dass** eine Anzahl von Fahrdynamiksensoren (6) in der elektronischen Reglereinheit (2) angeordnet ist.

8. Vorrichtung zur Fahrdynamikregelung (1) nach mindestens einem der Ansprüche 1 bis 7, **dadurch gekennzeichnet, dass** die elektronische Reglereinheit (2) einen Drehratensensor (20) und/oder einen, insbesondere mehrachsigen, Beschleunigungssensor (21) umfasst, welche direkt oder indirekt mit einem Gehäuseboden (3a) der Reglereinheit (2), welcher dem Fahrzeugchassis (4) gegenüberliegend angeordnet ist, oder mindestens einem Verbindungsmittel (24), welches die Reglereinheit (2) mit dem Fahrzeugchassis (4) im Wesentlichen starr verbindet, im Wesentlichen starr verbunden sind.

9. Vorrichtung zur Fahrdynamikregelung (1) nach Anspruch 8, **dadurch gekennzeichnet, dass** der eine oder die mehreren Sensoren (20, 21) auf einer Leiterplatte (19) angeordnet sind, welche im Wesentlichen steif mit dem mindestens einen Verbindungsmittel (24), verbunden ist.

10. Verwendung der Vorrichtung zur Fahrdynamikregelung gemäß mindestens einem der Ansprüche 1 bis 9 in Kraftfahrzeugen.

## Claims

1. Device (1) for the regulation of driving dynamics of a vehicle with an electronic regulator unit (2) and a valve block (10), **characterized in that** the electronic regulator unit (2) is constructed as a support base for attaching the valve block (10) to the vehicle chassis (4).

2. Device (1) for the regulation of driving dynamics according to Claim 1, **characterized in that** a number of damping elements (12) are arranged between the electronic regulator unit (2) and the valve block (10).

3. Device (1) for the regulation of driving dynamics according to Claim 1 or 2, **characterized in that** the electronic regulator unit (2) comprises a housing (3) which has at least a first housing area (13) which is of elastic design or has elastic properties.

4. Device (1) for the regulation of driving dynamics according to Claim 3, **characterized in that** the valve block (10) is attached to the housing of the electronic regulator unit (2).

5. Device (1) for the regulation of driving dynamics according to Claim 3 or 4, **characterized in that** the housing area (13) has an essentially meandering structure.

6. Device (1) for the regulation of driving dynamics according to at least one of Claims 1 to 5, **characterized in that** the electronic regulator unit (2) is connected in an essentially rigid, direct or indirect fashion to the vehicle chassis (4) by at least one connecting means.

7. Device (1) for the regulation of driving dynamics according to at least one of Claims 1 to 6, **characterized in that** a number of driving dynamics sensors (6) is arranged in the electronic regulator unit (2).

8. Device (1) for the regulation of driving dynamics according to at least one of Claims 1 to 7, **characterized in that** the electronic regulator unit (2) has a rotational speed sensor (20) and/or an acceleration sensor (21) which has, in particular, multiple axes, said sensor(s) being connected in an essentially rigid fashion, directly or indirectly, to a housing floor (3a) of the regulator unit (2), which housing floor (3a) is arranged opposite the vehicle chassis (4), or to at least one connecting means (24) which connects the regulator unit (2) in an essentially rigid fashion to the vehicle chassis (4).

9. Device (1) for the regulation of driving dynamics according to Claim 8, **characterized in that** the one or more sensors (20, 21) are arranged on a printed circuit board (19) which is essentially rigidly connected to the at least one connecting means (24).

10. Use of the device for the regulation of driving dynamics according to at least one of Claims 1 to 9 in motor vehicles.

## Revendications

1. Dispositif (1) de régulation de la dynamique de roulage d'un véhicule, le dispositif étant doté d'une unité électronique de régulation (2) et d'un bloc de soupapes (10),
**caractérisé en ce que**
l'unité électronique de régulation (2) est conçue comme socle de support permettant de fixer le bloc de soupapes (10) sur le châssis (4) du véhicule.

2. Dispositif (1) de régulation de la dynamique de roulage selon la revendication 1, **caractérisé en ce qu'**un certain nombre d'éléments d'amortissement (12) sont disposés entre l'unité électronique de régulation (2) et le bloc de soupapes (10).

3. Dispositif (1) de régulation de la dynamique de roulage selon les revendications 1 ou 2, **caractérisé en ce que** l'unité électronique de régulation (2) comporte un boîtier (3) dont au moins une partie (13) est élastique ou présente des propriétés élastiques.

4. Dispositif (1) de régulation de la dynamique de roulage selon la revendication 3, **caractérisé en ce que** le bloc de soupapes (10) est fixé sur le boîtier de l'unité électronique de régulation (2).

5. Dispositif (1) de régulation de la dynamique de roulage selon les revendications 3 ou 4, **caractérisé en ce que** la partie (13) du boîtier présente une structure essentiellement en méandres.

6. Dispositif (1) de régulation de la dynamique de roulage selon au moins l'une des revendications 1 à 5, **caractérisé en ce que** l'unité électronique de régulation (2) est reliée directement ou indirectement et de manière essentiellement rigide au châssis (4) du véhicule par l'intermédiaire d'au moins un moyen de liaison.

7. Dispositif (1) de régulation de la dynamique de roulage selon au moins l'une des revendications 1 à 6, **caractérisé en ce que** plusieurs détecteurs (6) de dynamique de roulage sont disposés dans l'unité électronique de régulation (2).

8. Dispositif (1) de régulation de la dynamique de roulage selon au moins l'une des revendications 1 à 7, **caractérisé en ce que** l'unité électronique de régulation (2) comporte un détecteur (20) de vitesse de rotation et/ou un détecteur (21) d'accélération, en particulier à plusieurs axes, qui sont reliés directement ou indirectement et de manière essentiellement rigide à un fond (3a) du boîtier de l'unité de régulation (2) disposé face au châssis (4) du véhicule ou à au moins un moyen de liaison (24) qui relie de manière essentiellement rigide l'unité de régulation (2) au châssis (4) du véhicule.

9. Dispositif (1) de régulation de la dynamique de roulage selon la revendication 8, **caractérisé en ce que** le ou les détecteurs (20, 21) sont disposés sur une carte de circuit (19) qui est reliée de manière essentiellement rigide au moyen ou aux moyens de liaison (24).

10. Utilisation du dispositif de régulation de la dynamique de roulage selon au moins l'une des revendications 1 à 9 dans des véhicules automobiles.
